Europäisches Patentamt

European Patent Office

Office européen des brevets

(11) Veröffentlichungsnummer: **0 174 570**
A2

# (12) EUROPÄISCHE PATENTANMELDUNG

(21) Anmeldenummer: 85110936.3

(22) Anmeldetag: 30.08.85

(51) Int. Cl.⁴: **A 01 F 29/02**
A 01 F 29/20

(30) Priorität: 10.09.84 DE 3433171

(43) Veröffentlichungstag der Anmeldung:
19.03.86 Patentblatt 86/12

(84) Benannte Vertragsstaaten:
AT CH FR IT LI NL

(71) Anmelder: Klöckner-Humboldt-Deutz AG
Zweigniederlassung Fahr

D-7702 Gottmadingen(DE)

(72) Erfinder: Maier, Martin, Ing.
Hilzingerstrasse 23
D-7702 Gottmadingen(DE)

(54) Scheibenradhäcksler.

(57) Der Scheibenradhäcksler, insbesondere für Mais, weist einen Einzugskanal für das geschnittene Gut und eine Vielzahl von Einzugswalzen auf. Die Gegenschneide und die Einzugswalzen sind im wesentlichen senkrecht angeordnet, wobei das die Häckselmesser tragende Scheibenrad sich im wesentlichen bis an den Mantel des Scheibenradgehäuses erstreckt und dieses in zwei Kammern unterteilt, wobei die eine Kammer mit der Abgabeeinrichtung. An einer der Einlaßöffnung im wesentlichen gegenüberliegende Stelle ist ein Übergangsgehäuse vorgesehen, während in der mit der Angabeeinrichtung in Verbindung stehenden Kammer eine Nachzerkleinerungsvorrichtung angeordnet ist.

Fig. 1

EP 0 174 570 A2

Croydon Printing Company Ltd.

Scheibenradhäcksler

Die Erfindung betrifft einen Scheibenradhäcksler, insbesondere
für Mais, mit einem Einzugskanal für das geschnittene Gut und
einer Vielzahl von Einzugswalzen, die das geschnittene Gut
einer im Scheibenradgehäuse angeordneten Einlaßöffnung mit
Gegenschneide zuführen, mit einer Nachzerkleinerungsvorrichtung
für das gehäckselte Gut und mit einer Abgabeeinrichtung für
das gehäckselte und nachzerkleinerte Gut.

Derartige Häckselmaschinen bestehen üblicherweise aus einem
in Fahrtrichtung gezogenen Rahmen, an dessen vorderen Ende
der Einzugskanal vorgesehen ist. Das geschnittene Erntegut, z. B. geschnittener Mais, wird dem mit hoher Geschwindigkeit in einem Gehäuse rotierendem Scheibenrad zugeführt,
das mit der an der Einlaßöffnung vorhandenen Gegenschneide
zusammenwirkt, um so das Erntegut in kleine Abschnitte zu
häckseln. Das gehäckselte Erntegut wird üblicherweise von
einer Abgabeeinrichtung, die oftmals aus einem Gebläse und
einem Auswurfstutzen besteht, auf einen bereitstehenden Erntewagen geleitet.

Wünschenswert bei einem derartigen Häcksler ist es nun, das
Häckselgut möglichst fein zu zerteilen, um einmal bei der
Silagegewinnung eine möglichst vollständige und gleichmäßige
Gärung des Futters zu erhalten oder um bei der Direktfütterung eine bessere Futterverwertung zu erzielen. Insbesondere
bei der Fütterung mit Mais ist es wichtig, daß sämliche Maiskörner zerteilt werden, da sonst das Vieh den Mais nicht
vollständig verdauen kann und so dessen Nährwert nicht vollständig ausgenutzt wird.

Um die Häckselwirkung eines Scheibenradhäckslers zu erhöhen,
ist es bereits aus der DE-OS 30 00 946 bekannt, dem mit den
Häckselmessern bestückten Scheibenrad zwei gegensinnig umlaufende Quetschwalzen nachzuordnen, wobei das Abstandsverhältnis zwischen den Walzen so eingstellt werden kann, daß
dasselbe kleiner als die Dicke eines durchschnittlichen
Maiskorns ist, wobei zur Übergabe des gehäckselten Gutes
auf die Quetschwalzen noch eine Hebeanordnung erforderlich
ist.

Ein derartiger Aufbau bedingt eine große Baulänge und einen
eigenen Antrieb für die Hebeanordnung.

Aus der europäischen Patentanmeldung 0 058 431 ist ferner
eine Futtererntemaschine bekannt zum Zerkleinern von Mais,
wobei ebenfalls einemmit Messernbestückten Scheibenrad
gegensinnig angetriebene Druckrollen nachgeordnet sind,
die als Walzenmühlenarbeiten und das gehäckselte Erntegut nachzerkleinern. Diese Druckrollen werfen das nachzerkleinerte
Gut sowohl nach rückwärts als nach unten, von wo es durch
Förderschnecken zum Auswurfgebläse gefördert werden muß.

Bei diesen bekannten Häckselmaschinen sind jeweils die
Achsen der Scheibenräder sowie die Achsen der Nachzerkleinerungsrollen parallel zum Boden angeordnet, wodurch das
zu häckselnde Erntegut nach dem Abschneiden umgelegt werden
muß, um von der Maschine verarbeitet werden zu können.

Es sind weiterhin auch Häckselmaschinen mit sogenannten Reibböden bekannt geworden, bei denen die Innenwand des das Scheibenrad begrenzenden Gehäuses zumindest teilweise mit parallel zur Drehachse des Scheibenrades angeordneten Rippen versehen ist, um so insbesondere Maiskörner vor dem Auswerfen zu zerkleinern.

Der vorliegenden Erfindung liegt die Aufgabe zugrunde, einen kompakten, billig herstellbaren Scheibenhäcksler zu schaffen von besonders hohem Wirkungsgrad, der in Anpassung an das zu erntende Gut entweder mit Quetschwalzen oder mit einem Reibboden ausgestattet werden kann und der eine vollständige Zerkleinerung z. B. von Körnern gewährleistet.

Ausgehend von einem Scheibenradhäcksler der eingangs näher genannten Art wird zur Lösung dieser Aufgabe vorgeschlagen, daß die Gegenschneide und die Einzugswalzen im wesentlichen senkrecht angeordnet sind, daß das die Häckselmesser tragende Scheibenrad sich im wesentlichen bis an den Mantel des Gehäuses erstreckt und dieses in zwei Kammern unterteilt, wobei die eine Kammer mit der Einlaßöffnung in Verbindung steht und die andere Kammer mit der Abgabeeinrichtung in Verbindung steht, daß an einer der Einlaßöffnung im wesentlichen gegenüberliegenden Stelle ein Übergangsgehäuse vorgesehen ist und daß die Nachzerkleinerungsvorrichtung in der mit der Abgabeeinrichtung in Verbindung stehenden Kammer vorgesehen ist.

Die Häckselmesser sind vorteilhafterweise an derjenigen
Seite des Scheibenrades vorgesehen, die die kleinere Kammer
begrenzt.

Besonders günstig ist es, wenn zwischen den Häckselmessern
kleine Transportschaufeln vorgesehen sind, die in einem
spitzen Winkel zum Scheibenrand angeordnet sind.

An der die größere Kammer begrenzenden Seite des Scheibenrades sind vorzugsweise Wurfschaufeln vorgesehen, die vorteilhafterweise in etwa ihrer Mitte einen sich im wesentlichen parallel zum Scheibenrad erstreckenden stumpfwinkligen
Knick aufweisen.

Das Übergangsgehäuse ist vorzugsweise aufklappbar und auswechselbar am Mantelgehäuse befestigt.

Besonders günstig ist es, wenn im Übergangsgehäuse ein
Leitblech angeorndet ist zum Überleiten des gehäckselten
Gutes von der kleineren Kammer in die größere Kammer.

Bei einem bevorzugten Ausführungsbeispiel besteht die Nachzerkleinerungsvorrichtung für das gehäckselte Gut aus einem
auswechselbaren Reibboden, der im untersten Teil der größeren
Kammer vorgesehen ist.

Beim anderen vorteilhaften Ausführungsbeispiel besteht die Nachzerkleinerungsvorrichtung für das gehäckselte Gut aus einem Körnerprozessor, der im Übergangsgehäuse vorgesehen ist.

In diesem Fall weist der Körnerprozessor zwei Quetschwalzen auf, die sich parallel zur Achse des Scheibenrades über die gesamte Breite des Übergangsgehäuses erstrecken; in Förderrichtung des nachzerkleinerten Gutes gesehen kann hinter dem Körnerprozessor ein Leitblech vorgesehen sein.

Mit der erfindungsgemäßen Häckselmaschine wird der bisher übliche Raum zum Häckseln und zum Nachzerkleinern sowie zum Auswerfen des fertigen Gutes erheblich verkleinert, wobei auch die bisher erforderliche Fördervorrichtung zwischen Nachzerkleinerungseinrichtung und Auswurfgebläse entfallen kann. Der Häcksler wird dadurch einfacher und billiger im Aufbau und insbesondere auch durch die senkrecht stehenden Einzugswalzen, die eine größere Lebensdauer aufweisen.

Je nach dem zu häckselnden Gut kann entweder ein Reibboden in der größeren Kammer eingesetzt werden oder aber der Körnerprozessor durch einfaches Aufklappen des Übergangsgehäuses und Verbinden des eingesetzten Körnerprozessors mit dem Antrieb für das Scheibenrad.

- 6                    0174570

Die stumpfwinklige Form der Wurfschaufeln in der großen
Kammer bewirkt einen besseren Transport des gehäckselten
Gutes, da die eine Fläche für eine gute Überleitung in die
größere Kammer sorgt und die zweite Schräge der Wurfschaufeln für eine verminderte Wandreibung sorgt. Im Abwurfbereich
wird durch die stumpfwinklige Schaufelform ein kompakterer Gutstrom erzielt.

Im folgenden wird die Erfindung anhand der Zeichnung näher
erläutert, in der zwei vorteilhafte Ausführungsbeispiele dargestellt sind.

Es zeigen

Figur 1    eine teilweise aufgeschnittene Ansicht durch das
           Scheibenradgehäuse eines ersten Ausführungsbeispiels
           mit einem Reibboden;

Figur 2    einen Schnitt entlang der Linie B-B von Figur 1;

Figur 3    einen Schnitt entlang der Linie A-A von Figur 1;

Figur 4    eine teilweise aufgeschnittene Ansicht durch das
           Scheibenradgehäuse eines zweiten Ausführungsbeispiels mit einem Körnerprozessor;

Figur 5    einen Schnitt entlang der Linie C-C von Figur 4 und

Figur 6    einen Schnitt entlang der Linie D-D von Figur 4.

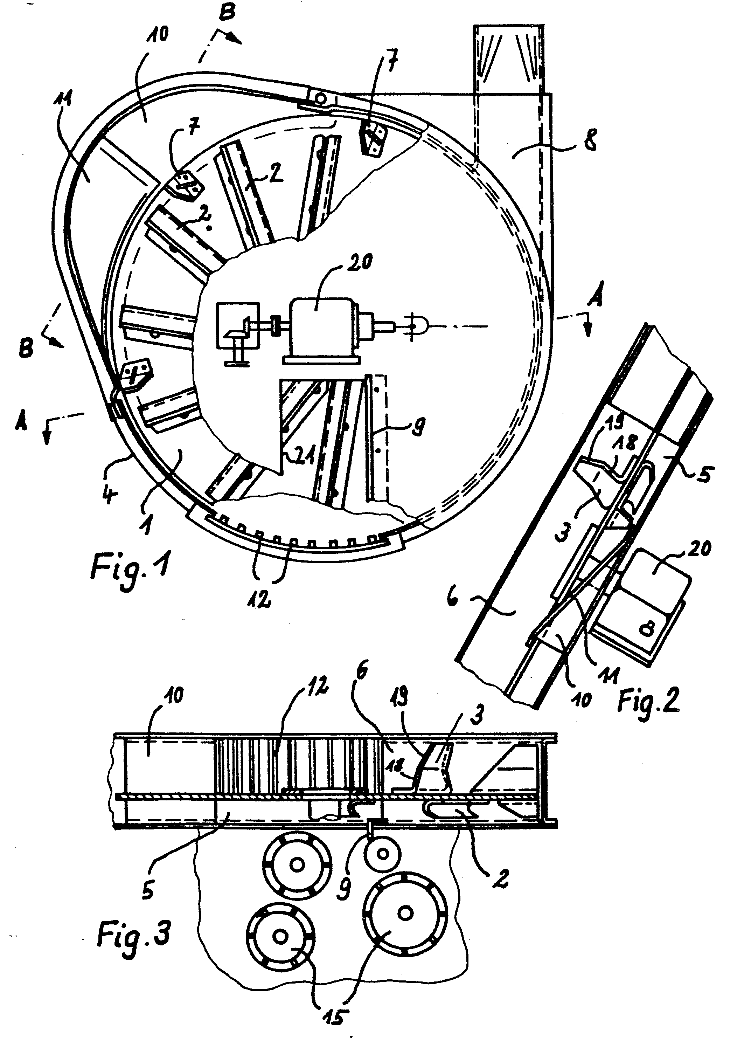

Der erfindungsgemäß ausgestaltete Scheibenradhäcksler kann
ein selbstfahrender oder ein gezogener Häcksler sein und
weist ein Gehäuse 4 auf, das mit einer Einlaßöffnung 21
versehen ist und mit einer Abgabeeinrichtung 8 in Verbindung
steht. Die Einlaßöffnung 21 ist im wesentlichen vertikal
ausgebildet und weist eine vertikal angeordnete Gegenschneide
9 auf, die mit den an einem Scheibenrad 1 befestigten Häckselmessern 2 zusammenwirkt. Wie Figur 3 erkennen läßt, sind vor
der Einlaßöffnung eine Vielzahl von Zufuhrwalzen 15 ebenfalls
mit vertikaler Achse angeordnet, die das zu häckselnde Gut
z. B. Maisstengel kontinuierlich  der Einlaßöffnung 21 zuführen. Mit 20 ist schematisch ein Antrieb für das Schneidrad 1 bezeichnet, das im Gehäuse 4 derart angeordnet ist,
daß sich sein Durchmesser fast bis an den Innendurchmesser
des Gehäuses 4 erstreckt.

Das Scheibenrad 1 teilt das Gehäuse 4 in zwei Kammern 5, 6,
wobei in der einen schmaleren Kammer 5 die hakenförmig  ausgebildeten Häckselmesser 2 auf dem Scheibenrad angeordnet sind.
Zwischen den Häckselmessern 2 sind kleine Transportschaufeln 7
vorgesehen, die vorzugsweise in einem spitzen Winkel zum
Scheibenrad angeordnet sind, so daß eine vorteilhafte Förderkomponente in Richtung auf die große Kammer 6 entsteht.

In der zweiten größeren Kammer 6, welche mit dem Auswurfstutzen
8 in Verbindung steht, sind Wurfschaufeln 3 auf dem Scheibenrad angeordnet. Diese Wurfschaufeln sind, wie insbesondere
Figuren 2 und 3 zeigen, in etwa ihrer Mitte derart abgeknickt,
daß sie eine stumpfwinklige Form aufweisen, wobei sich der
Knick parallel zum Scheibenrad erstreckt. Dadurch wird gewährleistet, daß die eine Fläche 18 für eine gute Überleitung in
die zweite größere Kammer 6 sorgt, während die zweite Fläche 19
der Wurfschaufel 3 für eine verminderte Wandreibung sorgt.
Ferner wird im Abwurfbereich, d. h. unterhalb des Auswurfstutzens 8, ein besonders kompakter Gutstrom erzielt.

Damit nun das durch die Häckselmesser 2 und die Gegenschneide
9 gehäckselte Gut von der ersten schmaleren Kammer 5 in die
zweite größere Kammer 6 gelangt, ist in Förderrichtung des
Scheibenrades gesehen etwa gegenüber der Einlaßöffnung 21
ein Übergangsgehäuse 10 angeordnet. Dies Übergangsgehäuse 10
ist aufklappbar und kann auswechselbar ausgeführt sein. Im
Übergangsgehäuse 10 ist ein schräges Leitblech 11 angebracht,
welches das gehäckselte Gut nach dem Häckseln sofort vollständig in die zweite größere Kammer 6 leitet.

Bei dem in den Figuren 1 bis 3 dargestellten Ausführungsbeispiel ist nun in der zweiten Kammer 6 ein auswechselbarer,
an und für sich bekannter Reibboden 12 am unteren Ende vorgesehen. Dadurch wird bewirkt, daß die durch die Wurfschaufel 3 in Richtung des Auswurfstutzens 8 beförderten Maiskörner angeschlagen und zerkleinert werden, bevor sie den
Scheibenradhäcksler verlassen.

9                                        0174570

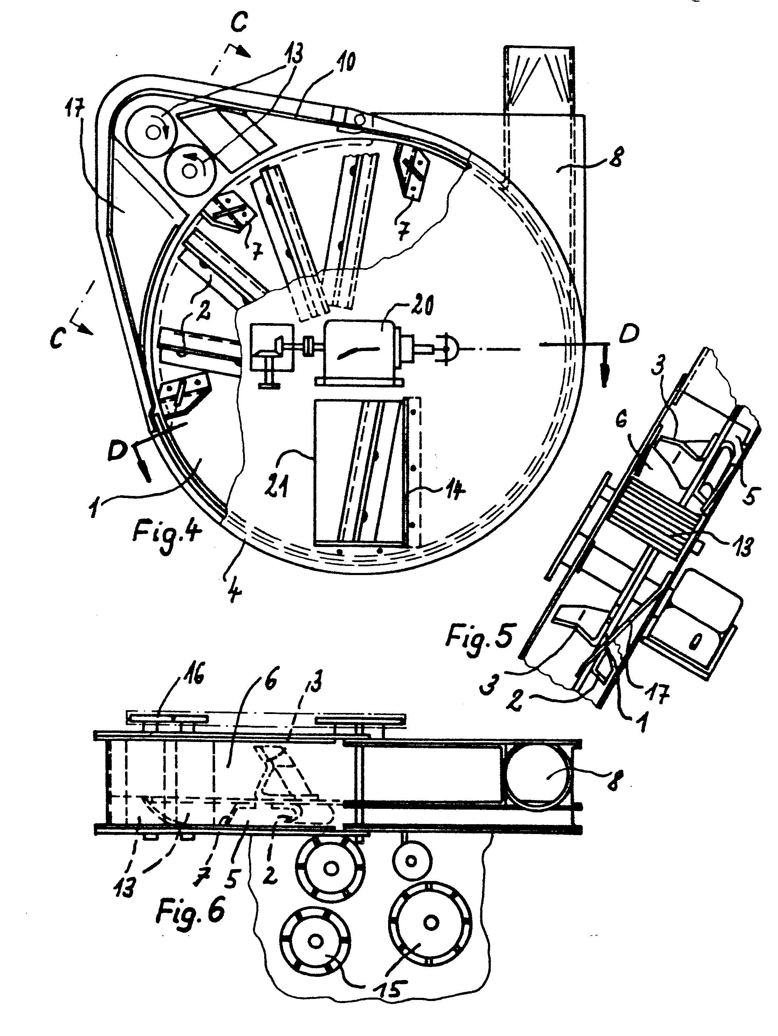

Bei dem in den Figuren 4 bis 6 dargestellten Ausführungsbeispiel sind gleiche Teile mit gleichen Bezugszeichen versehen. Anstelle eines energieverzehrenden Reibbodens ist
jedoch bei diesem Ausführungsbeispiel ein an sich bekannter
Körnerprozessor 13 vorgesehen, der in dem Übergangsgehäuse
10 angeordnet ist. In diesem Fall wird das Übergangsgehäuse 10
nach Figur 1 vollständig ausgewechselt und ein zweites Übergangsgehäuse 10 eingesetzt, in dem der Körnerprozessor 13
bereits fertig eingebaut ist. Der Körnerprozessor 13 besteht
aus zwei gegensinnig angetriebenen Quetschwalzen, die derart im Übergangsgehäuse 10 angebracht sind, daß sie sich
über die gesamt Gehäusebreite erstrecken. Nachdem das
Häckselgut die beiden Reibquetschwalzen 13 passiert hat,
sorgt ein schräg  im Übergangsgehäuse 10 stehendes Leitblech 17 für die sichere Überleitung zur Auswurfstelle unterhalb des Auswurfstutzens 8.

Die erfindungsgemäße Häckselmaschine gewährleistet mit ihren
eng beieinander liegenden beiden Kammern, der Umlenk- und
Nachzerkleinerungseinrichtung eine vollständige und sehr
wirkungsvolle Nachzerkleinerung des gesamten Häckselgutes.
Sie ermöglicht auch die Verwendung von senkrecht angeordneten Gegenschneiden und Zuführwalzen und einen besonders
kompakten Aufbau. Durch die Auswechselbarkeit des Übergangsgehäuses ist die Art der Nachzerkleinerung je nach
dem zu erntenden Gut leicht umstellbar.

Klöckner-Humboldt-Deutz AG Zweigniederlassung Fahr 7702 Gottmadingen Scheibenradhäcksler

Patentansprüche

1. Scheibenradhäcksler, insbesondere für Mais, mit einem Einzugskanal für das geschnittene Gut und einer Vielzahl von Einzugswalzen, die das geschnittene Gut einer im Scheibenradgehäuse angeordneten Einlaßöffnung mit Gegenschneide zuführen, mit einer Nachzerkleinerungsvorrichtung für das gehäckselte Gut und mit einer Abgabeeinrichtung für das gehäckselte und nachzerkleinerte Gut, dadurch gekennzeichnet, daß die Gegenschneide (9)und die Einzugswalzen (15)im wesentlichen senkrecht angeordnet sind, daß das die Häckelmesser (2) tragende Scheibenrad (1) sich im wesentlichen bis an den Innenumfang des Gehäuses (4) erstreckt und dieses in zwei Kammern (5, 6) unterteilt, wobei die eine Kammer (5) mit der Einlaßöffnung (21) in Verbindung steht und die andere Kammer (6) mit der Abgabeeinrichtung (8) in Verbindung steht, daß an einer der
Einlaßöffnung (21) im wesentlichen gegenüberliegenden
Stelle ein Übergangsgehäuse 10 vorgesehen ist und daß
die Nachzerkleinerungsvorrichtung in der mit der Abgabeeinrichtung (8) in Verbindung stehenden Kammer (6) vorgesehen ist.

2. Scheibenradhäcksler nach Anspruch 1, dadurch gekennzeichnet, daß die Häckselmesser (2) an derjenigen Seite des
Scheibenrades (1) vorgesehen sind, die die kleinere
Kammer (5) begrenzt.

3. Scheibenradhäcksler nach Anspruch 2, dadurch gekennzeichnet, daß zwischen den Häckselmessern (2) kleine Transportschaufeln (7) vorgesehen sind.

4. Scheibenradhäcksler nach Anspruch 3, dadurch gekennzeichnet,
daß die kleinen Transportschaufeln (7) im spitzen Winkel
zum Scheibenrand angeordnet sind.

5. Scheibenradhäcksler nach einem der vorhergehenden Ansprüche,
dadurch gekennzeichnet, daß die die größere Kammer (6) begrenzende Seite des Scheibenrades (1) mit Wurfschaufeln (3)
versehen ist.

6. Scheibenradhäcksler nach einem der vorhergehenden Ansprüche,
dadurch gekennzeichnet, daß jede Wurfschaufel (3) in etwa ihrer Mitte einen sich im wesentlichen parallel zum
Scheibenrad erstreckenden stumpfwinkligen Knick aufweist.

7. Scheibenradhäcksler nach einem der vorhergehenden Ansprüche,
dadurch gekennzeichnet, daß das Übergangsgehäuse(10) aufklappbar und auswechselbar aum Gehäuse  (4) befestigt ist.

8. Scheibenradhäcksler nach einem der vorhergehenden Ansprüche,
dadurch gekennzeichnet, daß im Übergangsgehäuse (10) ein
Leitblech (11) angeordnet ist zum Überleiten des gehäckselten Gutes von der kleineren Kammer (5) in die größere Kammer (6).

9. Scheibenradhäcksler nach einem der vorhergehenden Ansprüche,
dadurch gekennzeichnet, daß die Nachzerkleinerungsvorrichtung für das gehäckselte Gut aus einem auswechselbaren
Reibboden (12) besteht, der zumindest im untersten Teil
der größeren Kammer (6) vorgesehen ist.

10. Scheibenradhäcksler nach einem der vorhergehenden Ansprüche,
dadurch gekennzeichnet, daß die Nachzerkleinerungsvorrichtung für das gehäckselte Gut aus einem Körnerprozessor (13)
besteht, der im Übergangsgehäuse (10) vorgesehen ist.

11. Scheibenradhäcksler nach Anspruch 10, dadurch gekennzeichnet, daß der Körnerprozessor (13) zwei Quetschwalzen aufweist, die sich parallel zur Achse des Scheibenrades über
die gesamte Breite des Übergangsgehäuses (10) erstrecken.

12. Scheibenradhäcksler nach Anspruch 11, dadurch gekennzeichnet, daß in Förderrichtung des nachzerkleinerten Gutes gesehen, hinter dem Körnerprozessor (13) ein schräges Leitblech (17) vorgesehen ist.

Fig. 1

Fig. 2

Fig. 3

0174570

Fig. 4

Fig. 5

Fig. 6

0174570

2/2